# EUROPEAN PATENT SPECIFICATION

(11) **EP 2 220 848 B1**
(45) Date of publication and mention of the grant of the patent: **01.08.2012**
(21) Application number: 08857809.1
(22) Date of filing: 23.10.2008
(51) Int. Cl.: H04L 29/06

(54) **MOBILE ACCESS TO INTERNET-BASED APPLICATION WITH REDUCED POLLING**
MOBILZUGANG ZU AUF DEM INTERNET BASIERENDEN ANWENDUNGEN MIT VERRINGERTEM POLLING
ACCÈS DE MOBILE À UNE APPLICATION INTERNET AVEC UNE INTERROGATION RÉDUITE

(30) Priority: 04.12.2007 US 950233
(43) Date of publication of application: 25.08.2010
(73) Proprietor: Telefonaktiebolaget LM Ericsson (publ), 164 83 Stockholm (SE)
(72) Inventor: KARLSEN, Johnny, S-177 71 Järfälla (SE); WILLARS, Per, S-185 94 Vaxholm (SE)
(74) Representative: Åkerman, Mårten Lennart
(86) International application number: PCT/EP2008/064352
(87) International publication number: WO 2009/071386

(56) References cited:
- WO-A-03/088692
- WO-A-2006/070067
- US-A1- 2003 095 540

## Description

### BACKGROUND

The present invention relates to accessing an internet-based application by means of a mobile device, and more particularly to methods and apparatuses that enable a mobile device to access an internet-based application without needing to continuously poll the application to detect important changes in state.

Communication services are starting to appear implemented as browser/AJAX (Asynchronous JavaScript And XML) realizations. An example of one such service is meebo.com, which provides a browser based interface to instant messaging services provided by a number of different providers. A browser-based interface to Outlook is another example. Such implementations utilize the XMLHttpRequest feature of AJAX, or its equivalent, to communicate with a server.

Browser-web server architectures are designed to operate strictly in accordance with a client-server relationship: The browser, which operates only as a client, initiates a request to the server, and consequently receives a response back; there is no possibility for the server to initiate a communication to the browser.

To facilitate the communication services appearing on the Internet today, clients continuously poll the server so that they will be informed (via the response to the poll) of any state change, waiting message, pending communication request, and the like. Non-real time applications can schedule this polling to occur with low frequency but real-time applications, such as chat applications, need to poll much more frequently (e.g., every few seconds instead of minutes). An alternative solution to this frequent polling is to provide for polling with a delayed response. In this case, the server receives the request (poll) and if no state change is detected it delays sending any response until a state change is detected or a predefined timer expires. The predefined timer needs to be short enough to not let proxies and the like time out and consequently tear down the connection. The timer used in the meebo.com example is 30 seconds.

This arrangement performs very well over a broadband access; polling every 30 seconds does not create any problem over this type of access and the delayed response strategy means that there is no built in latency to deliver a communication request in a response message to a browser.

The above described solution does not work equally well when the application is accessed via cellular communications technology. One problem is that the frequent polling of the server consumes radio resources and battery power. Additionally, each polling causes the radio interface of the terminal to stay in a resource-consuming state for a significant amount of time (on the order of 10 sec - 2 minutes) before the terminal is allowed to go to sleep. This further increases the consumption of radio resources and drains the battery of the terminal. Having the terminal poll a state in the network is consequently not an efficient method to enable communication services in a browser environment. Document D1 WO 2006/070067 discloses such method and system and represent the closest prior-art.

It is therefore desirable to provide a mechanism wherein a mobile terminal can utilize an Internet-based application and obtain timely changes in state and/or other application-provided information without needing to frequently polling the application.

### SUMMARY

It should be emphasized that the terms "comprises" and "comprising", when used in this specification, are taken to specify the presence of stated features, integers, steps or components; but the use of these terms does not preclude the presence or addition of one or more other features, integers, steps, components or groups thereof.

In accordance with one aspect of the present invention, the foregoing and other objects are achieved in methods and apparatuses that provide a service in user equipment that operates within a mobile telecommunications system. In some embodiments, providing the service involves running a client application instance in the user equipment, wherein the client application instance interacts with a remotely-located server application via a network by means of a protocol that includes polling. The client application instance can be, for example, a browser application instance. A message is sent to the server application, wherein the message to the server application includes a PUSH address that uniquely identifies the user equipment and uniquely identifies the client application instance within the user equipment. A PUSH is subsequently received that includes the identifier of the client application instance. In response to the received PUSH, the client application instance is notified of the received PUSH. In response to the PUSH notification, the client application instance sends a polling message to the server application via the network. The client application instance receives a response to the polling message, wherein the response includes information associated with the service.

The message to the server application can be, for example, an HTTP request.

In another aspect, after sending the message to the server but before receiving the PUSH that includes the identifier of the client application instance, the client application instance can be operated in a sleep mode.

In some of such embodiments, the client application instance can be caused to leave the sleep mode in response to receiving the PUSH that includes the identifier of the client application instance. The client application instance can also be caused to leave the sleep mode in response to a detected action initiated by a user of the user equipment.

In another aspect, operation of a server application in embodiments consistent with the invention includes interacting with a remotely-located client application instance via a network by means of a protocol that includes polling. At some point, a message is received from a client application instance, wherein the message includes a PUSH address that uniquely identifies user equipment in a mobile telecommunications system, and uniquely identifies a client application instance running in the user equipment. The client application instance can be, for example, a browser application instance. The message can be, for example, an HTTP request. The server application then, at some point, determines that application-related information should be supplied to the client application instance, and in response thereto sends a PUSH request to a PUSH server in the mobile telecommunications system, wherein the PUSH request includes the PUSH address that uniquely identifies the user equipment in the mobile telecommunications system and uniquely identifies the client application instance running in the user equipment. The server application subsequently receives a polling message from the client application instance, and in response thereto sends the application-related information to the client application instance via a network to which the user equipment is connected.

In another aspect of embodiments, consistent with the invention, operation of the server application includes, after receiving the message from the client application instance but before determining that application-related information should be supplied to the client application instance, receiving a polling request from the client application instance and in response thereto performing: discarding the PUSH address that uniquely identifies the user equipment in the mobile telecommunications system and uniquely identifies the client application instance running in the user equipment; and operating the server application in a mode wherein no PUSH request including the PUSH address that uniquely identifies the user equipment in the mobile telecommunications system and uniquely identifies the client application instance running in the user equipment is sent to the PUSH server even if application-related information should be supplied to the client application instance.

### BRIEF DESCRIPTION OF THE DRAWINGS

The objects and advantages of the invention will be understood by reading the following detailed description in conjunction with the drawings in which:
FIG. 1 is a block diagram of user equipment (e.g., a mobile terminal) in which are running one or more browser application instances.
FIG. 2 is a flow chart of steps/processes/actions carried out by the various components in accordance with aspects of the invention.

### DETAILED DESCRIPTION

The various features of the invention will now be described with reference to the figures, in which like parts are identified with the same reference characters.

The various aspects of the invention will now be described in greater detail in connection with a number of exemplary embodiments. To facilitate an understanding of the invention, many aspects of the invention are described in terms of sequences of actions to be performed by elements of a computer system or other hardware capable of executing programmed instructions. It will be recognized that in each of the embodiments, the various actions could be performed by specialized circuits (e.g., discrete logic gates interconnected to perform a specialized function), by program instructions being executed by one or more processors, or by a combination of both. Moreover, the invention can additionally be considered to be embodied entirely within any form of computer readable carrier, such as solid-state memory, magnetic disk, optical disk (such as radio frequency, audio frequency or optical frequency carrier waves) containing an appropriate set of computer instructions that would cause a processor to carry out the techniques described herein. Thus, the various aspects of the invention may be embodied in many different forms, and all such forms are contemplated to be within the scope of the invention. For each of the various aspects of the invention, any such form of embodiments may be referred to herein as "logic configured to" perform a described action, or alternatively as "logic that" performs a described action.

In an aspect of embodiments consistent with the invention, the requirement for a mobile terminal or other device to frequently poll an Internet-based application in order to obtain timely state changes or other application-provided information is substantially eliminated by utilizing the PUSH functionality, which is a capability available in mobile networks. More particularly, a mechanism is provided that allows a mobile browser to be connected to the PUSH functionality available in the mobile terminal running the browser. The application running in the browser informs the server that it is ceasing to poll for information, with the expectation that it (i.e., the application running in the browser) will be notified via the PUSH functionality that updated information and/or new information is now available. The application running in the browser can then send a poll message to the server in order to request the updated and/or new information.

In another aspect, this mechanism provides for a PUSH address to be provided to the server, wherein the PUSH address identifies a specific browser instance running in the mobile terminal. The server can then, when it has information to give to the client, use the PUSH address to route a notification to the browser instance via a PUSH service.

These and other aspects are described in greater detail in the following description.

The traditional client/server arrangement described in the Background section is an example of what is called PULL technology whereby a client requests a service or information from a server, which then responds by transmitting the requested information or service-related data to the client. The information is, in this manner, "pulled" from the server by the client.

By contrast, the mechanism employed in embodiments consistent with the invention employs PUSH technology. PUSH technology provides a mechanism for one device (e.g., a server) to transmit information to one or more other devices without there having been a previous request or other action from those one or more other devices.

PUSH technology has been made available in so-called 2^{nd} Generation ("2G") mobile telecommunications devices (e.g., by means of the Wireless Application Protocol -- "WAP" PUSH), and in so-called 3^{rd} Generation ("3G") mobile telecommunications devices (e.g., by means of the Session Initiation Protocol -- "SIP" PUSH). These or any similar arrangement can be employed in embodiments consistent with the invention.

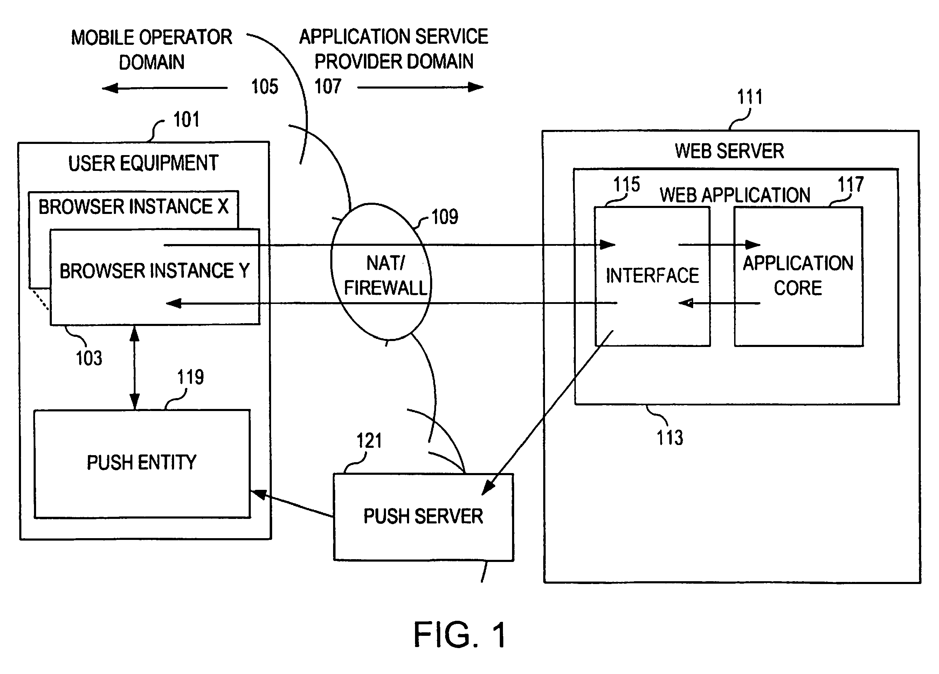

FIG. 1 is a block diagram of user equipment (e.g., a mobile terminal) 101 in which are running one or more browser application instances 103. The user equipment 101 operates within a mobile operator domain 105, but is able to communicate with other entities operating within an application service provider domain 107 by means of a Network Address Translator (NAT) / Firewall 109. NAT / Firewalls are generally well-known components in the field of networks, and therefore do not need to be described herein in great detail.

Located in the application service provider domain 107 is a web server 111. The web server includes and runs a web application 113. The browser application instance 103 and web application 113 are able to communicate with one another via the network that connects them, and in a conventional mode of operation take on respective client/server roles.

It is desired to avoid the constant polling associated with conventional client/server arrangements. Consequently, in accordance with an aspect of embodiments consistent with the invention, the web application includes an interface 115 through which information can flow between the browser application instance 103 and an application core 117. The application core 117 carries out the functionality that is specific to the web application 113.

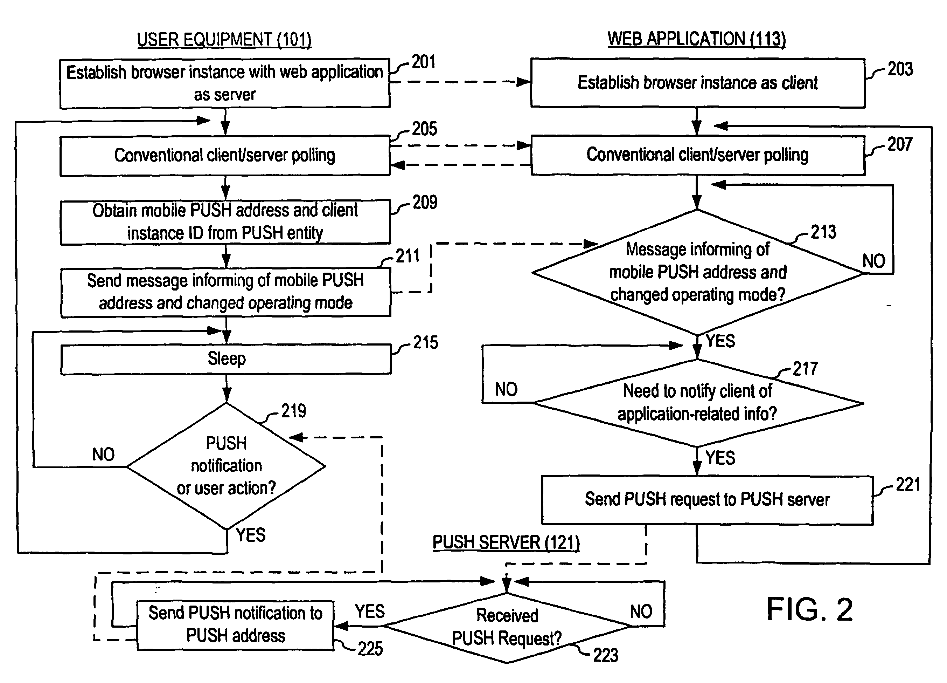

Also of relevance are a PUSH entity 119, which is located in the mobile terminal 100, and a PUSH server 121, located in the mobile operator domain 105 and reachable (i.e., can be communicated with) from the application service provider domain 107. These components and others will now be described by means of their functionality. This description will refer not only to FIG. 1, but also to FIG. 2, which is a flow chart of steps/processes/actions carried out by the various components.

FIG. 2 shows steps/processes/actions carried out in each of the user equipment 101, the web application 113, and the push server 121. The flow of control within any one of these elements is depicted by solid lines, whereas interactions between these components are illustrated by means of dotted lines.

To start things off, a web application is launched within the user equipment 101 (step 201), for example by means of actions performed by a user of the user equipment 101. This creates a client application instance in the form of, for example, a browser instance, and also causes the web application 113 to establish this client application instance as a client (step 203).

Interactions between the client application instance and the web application 113 are initially conventional: The client application instance sends polling messages to the web application 113, and the web application responds to these polling messages with the most current information (e.g., web-pages/scripts defining the service) available (steps 205, 207). Since this is a service with information that changes continuously but infrequently, it includes functionality for polling the application server and also a strategy for when to stop polling and to go to sleep.

At some point, the client application instance detects, according to the strategy delivered by the application, that it should stop polling the server for changing information, and that it should instead enter a sleep mode of operation. To carry this out, the client application instance asks the PUSH entity 119 to supply a mobile PUSH address and a client instance identifier. The mobile PUSH address and client instance identifier make it possible for the web server 111 to reach (via a PUSH operation) this particular client application instance running in the user equipment 101). When these are obtained (step 209), the user equipment 101 sends a message to the web application 113, wherein the message includes the PUSH address that uniquely identifies the user equipment and uniquely identifies the client application instance within the user equipment (step 211). In response to detecting receipt of the message ("YES" path out of decision block 213), the web application 113 stops expecting further polls from this client application instance, and instead stqres the PUSH information. The web application 113 can also send an acknowledgement (e.g., a "200 OK") to the client application instance to confirm the change in operating modes.

At this point, the client application instance operates in a sleep mode (step 215) in which it performs no polling. Instead, the web application 113 performs self monitoring to determine whether it needs to notify the client application instance about a state change that should be sent to the client application instance (decision block 217). The client application instance, meanwhile, will leave the sleep mode either when a PUSH notification is received or the user starts to interact with the service again. The client application instance 101 therefore monitors for these occurrences (decision block 219).

If, for example, the user starts to interact with the service again ("YES" path out of decision block 219, the client application instance returns to a conventional client/server polling mode of operation (step 205). Upon receipt of the polling request, the web application 133 discards the saved PUSH information and also returns to a conventional client/server polling mode of operation (step 207).

Alternatively, if the web application 113 detects that the application core 117 has generated a state change that should be sent to the client application instance ("YES" path out of decision block 217), it retrieves the previously-stored PUSH information, and uses it to generate a PUSH request that is sent to the PUSH server 121 (step 221). The PUSH request includes the PUSH address that uniquely identifies the user equipment in the mobile telecommunications system and uniquely identifies the client application instance running in the user equipment. The web application 113 then returns to the conventional client/server polling mode of operation (step 207), and consequently waits for a polling message.

Upon detecting receipt of the PUSH request ("YES" path out of decision block 223), the PUSH server 121 sends a PUSH notification to the destination indicated by the PUSH address (step 225). The PUSH notification includes the client application instance identifier.

The PUSH notification is received by the PUSH entity 119 within the user equipment 101. The PUSH entity 119 uses the client application instance identifier to determine to which client application instance (there may be more than one) the PUSH notification should be directed.

Upon detecting receipt of the PUSH notification ("YES" path out of decision block 219), the client application instance re-enters the conventional client/server polling mode of operation (step 205), and consequently sends a polling message to the web application 113.

In response to receipt of the polling message, the web application 113 sends updated information to the client application instance. Processing then continues as described above (e.g., the client application instance may, at some point, again enter a sleep mode and awaken in response to a PUSH notification).

Embodiments consistent with the invention provide the benefit of combining the high flexibility of a browser for application development with the ability to reach that environment with an existing and developing PUSH mechanism in mobile networks, thereby avoiding an excessive use of radio and battery resources.

The invention has been described with reference to particular embodiments. However, it will be readily apparent to those skilled in the art that it is possible to embody the invention in specific forms other than those of the embodiment described above.

For example, the embodiments described above partitioned particular functions in a way that was intended to facilitate a description (e.g., providing separate application interface and application core components). However, these embodiments are merely illustrative, and are not intended to indicate required implementations of these functions.

Thus, the described embodiments are merely illustrative and should not be considered restrictive in any way. The scope of the invention is given by the appended claims, rather than the preceding description, and all variations and equivalents which fall within the range of the claims are intended to be embraced therein.

## Claims

1. A method of providing a service in user equipment (101) that operates within a mobile telecommunications system, the method comprising:
running a client application instance in the user equipment (101) wherein the client application instance interacts with a remotely-located server application (113) via a network by means of a protocol that includes polling;
sending a message to the server application (113), wherein the message to the server application includes a PUSH address that uniquely identifies the user equipment (101) and uniquely identifies the client application instance (103) within the user equipment (101)
receiving a PUSH that includes the identifier of the client application (103) instance, and in response thereto notifying the client application instance (103) of the received PUSH; **characterized by** that:
in response to the PUSH notification, the client application instance (103) sending a polling message to the server application (113) via the network;
the client application instance (103) receiving a response to the polling message, wherein the response includes information associated with the service; and
after sending the message to the server (111) but before receiving the PUSH that includes the identifier of the client application instance (103) operating the client application instance in a sleep mode.

2. The method of claim 1, wherein the message to the server application (113) is an HTTP request.

3. The method of claim 1, comprising:
causing the client application instance (103) to leave the sleep mode in response to receiving the PUSH that includes the identifier of the client application instance (103).

4. The method of claim 1, comprising:
causing the client application instance (103) to leave the sleep mode in response to a detected action initiated by a user of the user equipment (101)

5. The method of claim 1, wherein the client application instance (103) is a browser application instance.

6. A method of operating a server application (103), the method comprising:
interacting with a remotely-located client application instance (103) via a network by means of a protocol that includes polling;
receiving a message from the client application instance (103), wherein the message includes a PUSH address that uniquely identifies user equipment in a mobile telecommunications system, and uniquely identifies the client application instance (103) running in the user equipment (101);
determining that application-related information should be supplied to the client application instance (103) and in response thereto sending a PUSH request to a PUSH server in the mobile telecommunications system thereby making the client application instance (103) leaving the sleep mode, wherein the PUSH request includes the PUSH address that uniquely identifies the user equipment (101) in the mobile telecommunications system and uniquely identifies the client application instance (103) running in the user equipment (101)
subsequently receiving a polling message from the client application instance (103) and in response whereto sending the application-related information to the client application instance (103) via a network to which the user equipment (101) is connected; and
after receiving the message from the client application instance (103) but before determining that application-related information should be supplied to the client application instance (103) receiving a polling request from the client application instance (103) and in response thereto performing:
discarding the PUSH address that uniquely identifies the user tulle equipment 101) in the mobile telecommunications system and uniquely identifies the client application instance (103) running in the user equipment (101) and
operating the server application (113) in a mode wherein no PUSH request including the PUSH address that uniquely identifies the user equipment (101) in the mobile telecommunications system and uniquely identifies the client application instance (103) running in the user equipment (101) is sent to the PUSH server even if application-related information should be supplied to the client application instance (103).

7. The method of claim 6, wherein the message from the client application instance (103) is an HTTP request.

8. The method of claim 6, wherein the client application instance (103) is a browser application instance.

9. An apparatus for providing a service in user equipment (101) that operates within a mobile telecommunications system, the apparatus comprising:
logic that runs a client application instance (103) in the user equipment (101) wherein the client application instance (103) interacts with a remotely-located server application (113) via a network by means of a protocol that includes polling;
logic that sends a message to the server application (113)wherein the message to the server application (113) includes a PUSH address that uniquely identifies the user equipment (101) and uniquely identifies the client application instance (103) within the user equipment (101)
logic that receives a PUSH that includes the identifier of the client application instance (103) and in response thereto notifying the client application instance (103) of the received PUSH; **characterized in that**:
logic that causes the client application instance (103) to send a polling message to the server application (113) via the network in response to the PUSH notification;
logic that causes the client application instance to receive a response to the polling message, wherein the response includes information associated with the service; and
logic that causes the client application (103) instance to enter a sleep mode of operation after sending the message to the server (111) but before receiving the PUSH that includes the identifier of the client application instance (103).

10. The apparatus of claim 9, wherein the message to the server application (113) is an HTTP request.

11. The apparatus of claim 9, comprising:
logic that causes the client application instance (103) to leave the sleep mode in response to receiving the PUSH that includes the identifier of the client application instance (103).

12. The apparatus of claim 9, comprising:
logic that causes the client application instance (103) to leave the sleep mode in response to a detected action initiated by a user of the user equipment (101).

13. The apparatus of claim 9, wherein the client application instance (103) is a browser application instance.

14. An apparatus for operating a server application (113) the apparatus comprising:
logic that interacts with a remotely-located client application instance (103) via a network by means of a protocol that includes polling;
logic that receives a message from the client application instance (103) wherein the message includes a PUSH address that uniquely identifies user equipment (101) in a mobile telecommunications system, and uniquely identifies the client application instance (103) running in the user equipment (101)
logic that determines that application-related information should be supplied to the client application instance (103) and in response thereto sends a PUSH request to a PUSH server (121) in the mobile telecommunications system thereby making the client application instance (103) leaving the sleep made, wherein the PUSH request includes the PUSH address that uniquely identifies the user equipment (101) in the mobile telecommunications system and uniquely identifies the client application instance (103) running in the user equipment (101)
logic that receives a subsequent polling message from the client application instance (103) and in response thereto sends the application-related information to the client application instance (103) via a network to which the user equipment (101) is connected; and
logic that receives a polling request from the client application instance (103) after receiving the message from the client application instance (103) but before determining that application-related information should be supplied to the client application instance (103) and in response thereto performs:
discarding the PUSH address that uniquely identifies the user equipment (101) in the mobile telecommunications system and uniquely identifies the client application instance running in the user equipment; (101) and
operating the server application (113) in a mode wherein no PUSH request including the PUSH address that uniquely identifies the user equipment (101) in the mobile telecommunications system and uniquely identifies the client application instance (103) running in the user equipments (101) is sent to the PUSH server even if application-related information should be supplied to the client application instance (103).

15. The apparatus of claim 14, wherein the message from the client application instance (103) is an HTTP request.

16. The apparatus of claim 14, wherein the client application instance (103) is a browser application instance.

## Patentansprüche

1. Verfahren zur Bereitstellung eines Dienstes in einer Benutzereinrichtung (101), die innerhalb eines Mobiltelekommunikationssystems agiert, wobei das Verfahren umfasst:
Ausführen einer Client-Anwendungsinstanz in der Benutzereinrichtung (101), wobei die Client-Anwendungsinstanz über ein Netzwerk mittels eines Protokolls, das Polling umfasst, mit einer entfernt angeordneten Serveranwendung (113) interagiert;
Senden einer Nachricht an die Serveranwendung (113), wobei die Nachricht an die Serveranwendung eine PUSH-Adresse umfasst, welche die Benutzereinrichtung (101) eindeutig identifiziert und die Client-Anwendungsinstanz (103) innerhalb der Benutzereinrichtung (101) eindeutig identifiziert;
Empfangen eines PUSHs, das die Kennung der Client-Anwendungsinstanz (103) umfasst, und Benachrichtigen als Reaktion darauf der Client-Anwendungsinstanz (103) vom empfangenen PUSH;
**dadurch gekennzeichnet, dass**:
die Client-Anwendungsinstanz (103) als Reaktion auf die Benachrichtigung eine Polling-Nachricht über das Netzwerk an die Serveranwendung (113) sendet;
die Client-Anwendungsinstanz (103) eine Antwort auf die Polling-Nachricht empfängt, wobei die Antwort Informationen umfasst, die mit dem Dienst assoziiert sind; und
Betreiben der Client-Anwendungsinstanz (103) nach dem Senden der Nachricht an den Server (111), aber vor dem Empfangen des PUSHs, das die Kennung der Client-Anwendungsinstanz (103) umfasst, in einem Ruhemodus.

2. Verfahren nach Anspruch 1, wobei die Nachricht an die Serveranwendung (113) eine HTTP-Anforderung ist.

3. Verfahren nach Anspruch 1, umfassend:
Veranlassen der Client-Anwendungsinstanz 103), den Ruhemodus als Reaktion auf den Empfang des PUSHs, das die Kennung der Client-Anwendungsinstanz (103) umfasst, zu verlassen.

4. Verfahren nach Anspruch 1, umfassend:
Veranlassen der Client-Anwendungsinstanz 103), den Ruhemodus als Reaktion auf eine erkannte Aktion, die von einem Benutzer der Benutzereinrichtung (101) eingeleitet wird, zu verlassen.

5. Verfahren nach Anspruch 1, wobei die Client-Anwendungsinstanz (103) eine Browser-Anwendungsinstanz ist.

6. Verfahren zum Betreiben einer Serveranwendung (113), wobei das Verfahren umfasst:
Interagieren mit einer entfernt angeordneten Client-Anwendungsinstanz (103) über ein Netzwerk mittels eines Protokolls, das Polling umfasst;
Empfangen einer Nachricht von der Client-Anwendungsinstanz (103), wobei die Nachricht eine PUSH-Adresse umfasst, welche die Benutzereinrichtung in einem Mobiltelekommunikationssystem eindeutig identifiziert und die Client-Anwendungsinstanz (103), die in der Benutzereinrichtung (101) ausgeführt wird, eindeutig identifiziert;
Bestimmen, dass anwendungsbezogene Informationen an die Client-Anwendungsinstanz (103) geliefert werden sollten, und Senden als Reaktion darauf einer PUSH-Anforderung an einen PUSH-Server im Mobiltelekommunikationssystem, wodurch die Client-Anwendungsinstanz (103) veranlasst wird, den Ruhemodus zu verlassen, wobei die PUSH-Anforderung die PUSH-Adresse umfasst, welche die Benutzereinrichtung (101) im Mobiltelekommunikationsnetz eindeutig identifiziert und die Client-Anwendungsinstanz (103), die in der Benutzereinrichtung (101) ausgeführt wird, eindeutig identifiziert;
anschließendes Empfangen einer Polling-Nachricht von der Client-Anwendungsinstanz (103) und Senden als Reaktion darauf der anwendungsbezogenen Informationen an die Client-Anwendungsinstanz (103) über ein Netzwerk, an das die Benutzereinrichtung (101) angeschlossen ist; und
Empfangen nach dem Empfangen der Nachricht von der Client-Anwendungsinstanz (103), aber vor dem Bestimmen, dass anwendungsbezogene Informationen an die Client-Anwendungsinstanz (103) geliefert werden sollten, einer Polling-Anforderung von der Client-Anwendungsinstanz (103) und Durchführen als Reaktion darauf der folgenden Schritte:
Verwerfen der PUSH-Adresse, welche die Benutzereinrichtung (101) im Mobiltelekommunikationsnetz eindeutig identifiziert und die Client-Anwendungsinstanz (103), die in der Benutzereinrichtung (101) ausgeführt wird, eindeutig identifiziert; und
Betreiben der Serveranwendung (113) in einem Modus, in dem keine PUSH-Anforderung, welche die PUSH-Adresse umfasst, welche die Benutzereinrichtung (101) im Mobiltelekommunikationsnetz eindeutig identifiziert und die Client-Anwendungsinstanz (103), die in der Benutzereinrichtung (101) ausgeführt wird, eindeutig identifiziert, an den PUSH-Server gesendet wird, selbst wenn anwendungsbezogene Informationen an die Client-Anwendungsinstanz (103) geliefert werden sollten.

7. Verfahren nach Anspruch 6, wobei die Nachricht von der Client-Anwendungsinstanz (103) eine HTTP-Anforderung ist.

8. Verfahren nach Anspruch 6, wobei die Client-Anwendungsinstanz (103) eine Browser-Anwendungsinstanz ist.

9. Vorrichtung zum Bereitstellen eines Dienstes in einer Benutzereinrichtung (101), die innerhalb eines Mobiltelekommunikationssystems agiert, wobei Vorrichtung umfasst:
Logik, die eine Client-Anwendungsinstanz (103) in der Benutzereinrichtung (101) ausführt, wobei die Client-Anwendungsinstanz über ein Netzwerk mittels eines Protokolls, das Polling umfasst, mit einer entfernt angeordneten Serveranwendung (113) interagiert;
Logik, die eine Nachricht an die Serveranwendung (113) sendet, wobei die Nachricht an die Serveranwendung (113) eine PUSH-Adresse umfasst, welche die Benutzereinrichtung (101) eindeutig identifiziert und die Client-Anwendungsinstanz (103) innerhalb der Benutzereinrichtung (101) eindeutig identifiziert;
Logik, die ein PUSH empfängt, das die Kennung der Client-Anwendungsinstanz (103) umfasst, und als Reaktion darauf die Client-Anwendungsinstanz (103) vom empfangenen PUSH benachrichtigt;
**gekennzeichnet durch**:
Logik, welche die Client-Anwendungsinstanz (103) veranlasst, als Reaktion auf die Benachrichtigung eine Polling-Nachricht über das Netzwerk an die Serveranwendung (113) zu senden;
Logik, welche die Client-Anwendungsinstanz (103) veranlasst, eine Antwort auf die Polling-Nachricht zu empfangen, wobei die Antwort Informationen umfasst, die mit dem Dienst assoziiert sind; und
Logik, welche die Client-Anwendungsinstanz (103) veranlasst, nach dem Senden der Nachricht an den Server (111), aber vor dem Empfangen des PUSHs, das die Kennung der Client-Anwendungsinstanz (103) umfasst, in einen Ruhemodus zu treten.

10. Vorrichtung nach Anspruch 9, wobei die Nachricht an die Serveranwendung (113) eine HTTP-Anforderung ist.

11. Vorrichtung nach Anspruch 9, umfassend:
Logik, welche die Client-Anwendungsinstanz 103) veranlasst, den Ruhemodus als Reaktion auf den Empfang des PUSHs, das die Kennung der Client-Anwendungsinstanz (103) umfasst, zu verlassen.

12. Vorrichtung nach Anspruch 9, umfassend:
Logik, welche die Client-Anwendungsinstanz 103) veranlasst, den Ruhemodus als Reaktion auf eine erkannte Aktion, die von einem Benutzer der Benutzereinrichtung (101) eingeleitet wird, zu verlassen.

13. Vorrichtung nach Anspruch 9, wobei die Client-Anwendungsinstanz (103) eine Browser-Anwendungsinstanz ist.

14. Vorrichtung zum Betreiben einer Serveranwendung (113), wobei die Vorrichtung umfasst:
Logik, die mit einer entfernt angeordneten Client-Anwendungsinstanz (103) über ein Netzwerk mittels eines Protokolls interagiert, das Polling umfasst;
Logik, die eine Nachricht von der Client-Anwendungsinstanz (103) empfängt, wobei die Nachricht eine PUSH-Adresse umfasst, welche die Benutzereinrichtung (101) in einem Mobiltelekommunikationssystem eindeutig identifiziert und die Client-Anwendungsinstanz (103), die in der Benutzereinrichtung (101) ausgeführt wird, eindeutig identifiziert;
Logik, die bestimmt, dass anwendungsbezogene Informationen an die Client-Anwendungsinstanz (103) geliefert werden sollten, und als Reaktion darauf eine PUSH-Anforderung an einen PUSH-Server (121) im Mobiltelekommunikationssystem sendet, wodurch die Client-Anwendungsinstanz (103) veranlasst wird, den Ruhemodus zu verlassen, wobei die PUSH-Anforderung die PUSH-Adresse umfasst, welche die Benutzereinrichtung (101) im Mobiltelekommunikationsnetz eindeutig identifiziert und die Client-Anwendungsinstanz (103), die in der Benutzereinrichtung (101) ausgeführt wird, eindeutig identifiziert;
Logik, die eine anschließende Polling-Nachricht von der Client-Anwendungsinstanz (103) empfängt und als Reaktion darauf die anwendungsbezogenen Informationen über ein Netzwerk, an das die Benutzereinrichtung (101) angeschlossen ist, an die Client-Anwendungsinstanz (103) sendet; und
Logik, die nach dem Empfangen der Nachricht von der Client-Anwendungsinstanz (103), aber vor dem Bestimmen, dass anwendungsbezogene Informationen an die Client-Anwendungsinstanz (103) gesendet werden sollten, eine Polling-Anforderung von der Client-Anwendungsinstanz (103) empfängt und als Reaktion darauf die folgenden Schritte durchführt:
Verwerfen der PUSH-Adresse, welche die Benutzereinrichtung (101) im Mobiltelekommunikationsnetz eindeutig identifiziert und die Client-Anwendungsinstanz, die in der Benutzereinrichtung (101) ausgeführt wird, eindeutig identifiziert; und
Betreiben der Serveranwendung (113) in einem Modus, in dem keine PUSH-Anforderung, welche die PUSH-Adresse umfasst, welche die Benutzereinrichtung (101) im Mobiltelekommunikationsnetz eindeutig identifiziert und die Client-Anwendungsinstanz (103), die in der Benutzereinrichtung (101) ausgeführt wird, eindeutig identifiziert, an den PUSH-Server gesendet wird, selbst wenn anwendungsbezogene Informationen an die Client-Anwendungsinstanz (103) geliefert werden sollten.

15. Vorrichtung nach Anspruch 14, wobei die Nachricht von der Client-Anwendungsinstanz (103) eine HTTP-Anforderung ist.

16. Vorrichtung nach Anspruch 14, wobei die Client-Anwendungsinstanz (103) eine Browser-Anwendungsinstanz ist.

## Revendications

1. Procédé de fourniture d'un service dans un équipement d'utilisateur (101) qui fonctionne à l'intérieur d'un système de télécommunications mobile, le procédé comprenant de :
exécuter une instance d'application client dans l'équipement d'utilisateur (101), dans lequel l'instance d'application client interagit avec une application de serveur (113) située à distance via un réseau au moyen d'un protocole qui inclut une interrogation ;
envoyer un message à l'application de serveur (113), dans lequel le message à l'application de serveur inclut une adresse PUSH qui identifie de manière unique l'équipement d'utilisateur (1) et identifie de manière unique l'instance d'application client (103)à l'intérieur de l'équipement d'utilisateur (101) ;
recevoir un PUSH qui inclut l'identifiant de l'instance d'application client (103), et en réponse à celui-ci, notifier à l'instance d'application client (103) le PUSH reçu ; **caractérisé en ce que**
en réponse à la notification PUSH, l'instance d'application client (103) envoie un message d'interrogation à l'application de serveur (113) via le réseau ;
l'instance d'application client (103) reçoit une réponse au message d'interrogation, dans lequel la réponse inclut une information associée au service ; et
après l'envoi du message au serveur (111) mais avant de recevoir le PUSH qui inclut l'identifiant de l'instance d'application client (103), faire fonctionner l'instance d'application client dans un mode de veille.

2. Procédé selon la revendication 1, dans lequel le message au serveur d'application (113) est une demande HTTP.

3. Procédé selon la revendication 1, comprenant de :
amener l'instance d'application client (103) à quitter le mode de veille en réponse à la réception du PUSH qui inclut l'identifiant de l'instance d'application client (103).

4. Procédé selon la revendication 1, comprenant de :
amener l'instance d'application client (103) à quitter le mode de veille en réponse à une action détectée amorcée par un utilisateur de l'équipement d'utilisateur (101).

5. Procédé selon la revendication 1, dans lequel l'instance d'application client (103) est une instance d'application de navigateur.

6. Procédé de fonctionnement d'une application de serveur (113), le procédé comprenant de :
interagir avec une instance d'application client (103) située à distance via un réseau au moyen d'un protocole qui inclut une interrogation ;
recevoir un message depuis l'instance d'application client (103), dans lequel le message inclut une adresse PUSH qui identifie de manière unique un équipement d'utilisateur dans un système de télécommunications mobile, et identifie de manière unique l'instance d'application client (103) s'exécutant dans l'équipement d'utilisateur (101) ;
déterminer qu'une information relative à l'application devrait être fournie à l'instance d'application client (103) en réponse à l'envoi par celle-ci d'une demande PUSH à un serveur PUSH dans le système de télécommunications mobile, en amenant ainsi l'instance d'application client (103) à quitter le mode de veille, dans lequel la demande PUSH inclut l'adresse PUSH qui identifie de manière unique l'équipement d'utilisateur (101) dans le système de télécommunications mobile et identifie de manière unique l'instance d'application client (103) s'exécutant dans l'équipement d'utilisateur (101) ;
recevoir par la suite un message d'interrogation provenant de l'instance d'application client (103) et, en réponse à celui-ci, envoyer l'information relative à l'application à l'instance d'application client (103) via un réseau auquel l'équipement d'utilisateur (101) est connecté ; et
après la réception du message provenant de l'instance d'application client (103) mais avant la détermination que l'information relative à l'application devrait être fournie à l'instance d'application client (103), recevoir une demande d'interrogation provenant de l'instance d'application client (103) en réponse à l'exécution par celle-ci des étapes consistant à :
rejeter l'adresse PUSH qui identifie de manière unique l'équipement d'utilisateur (101) dans le système de télécommunications mobile et identifie de manière unique l'instance d'application client (103) s'exécutant dans l'équipement d'utilisateur (101) ; et
faire fonctionner l'application de serveur (113) dans un mode dans lequel aucune demande PUSH incluant l'adresse PUSH qui identifie de manière unique l'équipement d'utilisateur (101) dans le système de télécommunications mobile et identifie de manière unique l'instance d'application client (103) dans l'équipement d'utilisateur (101) n'est envoyée au serveur PUSH même si l'information relative à l'application devait être fournie à l'instance d'application client (103).

7. Procédé selon la revendication 6, dans lequel le message provenant de l'instance d'application client (103) est une demande HTTP.

8. Procédé selon la revendication 6, dans lequel l'instance d'application client (103) est une instance d'application de navigateur.

9. Dispositif de fourniture d'un service dans un équipement d'utilisateur (101) qui fonctionne à l'intérieur d'un système de télécommunications mobile, le dispositif comprenant :
une logique qui exécute une instance d'application client (103) dans l'équipement d'utilisateur (101) dans lequel l'instance d'application client (103) interagit avec une application de serveur (113) située à distance via un réseau au moyen d'un protocole qui inclut une interrogation ;
une logique qui envoie un message à l'application de serveur (113), dans lequel le message à l'application de serveur (113) inclut une adresse PUSH qui identifie de manière unique l'équipement d'utilisateur (101) et identifie de manière unique l'instance d'application client (103) à l'intérieur de l'équipement d'utilisateur (101) ;
une logique qui reçoit un PUSH qui inclut l'identifiant de l'instance d'application client (103) et en réponse à celui-ci notifie à l'instance d'application client le PUSH reçu ; **caractérisé en ce que**
une logique qui amène l'instance d'application client (103) à envoyer un message d'interrogation à l'application de serveur (113) via le réseau en réponse à la notification PUSH ;
une logique qui amène l'instance d'application client à recevoir une réponse au message d'interrogation, dans lequel la réponse inclut une information associée au service ; et
une logique qui amène l'instance d'application client (103) à entrer en mode de fonctionnement de veille après l'envoi du message au serveur (111) avant de recevoir le PUSH qui inclut l'identifiant de l'instance d'application client (103).

10. Dispositif selon la revendication 9, dans lequel le message à l'application de serveur (113) est une demande HTTP.

11. Dispositif selon la revendication 9, comprenant :
une logique qui amène l'instance d'application client (103) à quitter le mode de veille en réponse à la réception du PASH qui inclut l'identifiant de l'instance d'application client (103).

12. Dispositif selon la revendication 9, comprenant :
une logique qui amène l'instance d'application à client (103) à quitter le mode de veille en réponse à une action détectée amorcée par un utilisateur de l'équipement d'utilisateur (101).

13. Dispositif selon la revendication 9, dans lequel l'instance d'application client (103) est une instance d'application de navigateur.

14. Dispositif pour faire fonctionner une application de serveur (113), le dispositif comprenant :
une logique qui interagit avec une instance d'application client (103) situé à distance via un réseau au moyen d'un protocole qui inclut une interrogation ;
une logique qui reçoit un message provenant de l'instance d'application client (103), dans lequel le message inclut une adresse PUSH qui identifie de manière unique un équipement d'utilisateur (101) dans un système de télécommunications mobile et identifie de manière unique l'instance d'application client (103) s'exécutant dans l'équipement d'utilisateur (101) ;
une logique qui détermine que l'information relative à l'application devrait être fournie à l'instance d'application client (103) et en réponse à celle-ci envoie une demande PUSH(121) dans le système de télécommunications mobile, en amenant ainsi l'instance d'application client (103) à quitter le mode de veille, dans lequel la demande PUSH inclut l'adresse PUSH qui identifie de manière unique l'équipement d'utilisateur (101) dans le système de télécommunications mobile et identifie de manière unique l'instance d'application client (103) s'exécutant dans l'équipement d'utilisateur (101) ;
une logique qui reçoit un message d'interrogation subséquent provenant de l'instance d'application client (103) et en réponse à celui-ci envoie l'information relative à l'application à l'instance d'application client (103) via un réseau auquel l'équipement d'utilisateur (101) est connecté ; et
une logique qui reçoit une demande d'interrogation provenant de l'instance d'application client (103) après avoir reçu le message provenant de l'instance d'application client (103) mais avant de déterminer que l'information relative à l'application devrait être fournie à l'instance d'application client (103) et en réponse à cela effectuer les étapes consistant à :
rejeter l'adresse PUSH qui identifie de manière unique l'équipement d'utilisateur (101) dans le système de télécommunications mobile et identifie de manière unique l'instance d'application client (103) s'exécutant dans l'équipement d'utilisateur (101) ; et
faire fonctionner l'application de serveur (113) dans un mode dans lequel aucune demande PUSH incluant l'adresse PUSH qui identifie de manière unique l'équipement d'utilisateur (101) dans le système de télécommunications mobile et identifie de manière unique l'instance d'application client (103) dans l'équipement d'utilisateur (101) n'est envoyée au serveur PUSH même si l'information relative à l'application devait être fournie à l'instance d'application client (103).

15. Dispositif selon la revendication14, dans lequel le message provenant de l'instance d'application client (103) est une demande HTTP.

16. Dispositif selon la revendication 14, dans lequel l'instance d'application client (103) est une instance d'application de navigation.
